# DEMANDE DE BREVET EUROPEEN

(11) **EP 4 759 728 A1**
(43) Date de publication de la demande: **17.06.2026**
(21) Numéro de dépôt: 25222540.4
(22) Date de dépôt: 11.12.2025
(51) Int. Cl.: B64U 70/50, B64U 80/10, B64U 80/40, B64U 80/25, B64U 80/82, B64U 80/84, B64U 80/86

(54) **SYSTÈME ET PROCÉDÉ DE LANCEMENT D'UNE PLURALITÉ DE DRONES AVEC BAGUES DE GUIDAGE**

(30) Priorité: 13.12.2024 FR 2414099
(71) Demandeur: NAVAL Group, 75015 Paris (FR)
(72) Inventeur: MORAUX, Alexandre, 16600 RUELLE-SUR-TOUVRE (FR); GEVEAUX, Pierre, 16600 RUELLE SUR TOUVRE (FR)
(74) Mandataire: Lavoix

(57) **Abrégé**

Système de lancement d'une pluralité de drones (12), comprenant :
- au moins deux tiges de guidage (18A, 18B) s'étendant dans une direction de guidage (Z),
- des dispositifs d'interface (20) fixés sur les drones pour former un empilement, et comportant au moins deux zones d'interface (20A, 20B) coopérant avec les deux tiges de guidage pour guider chacun des dispositifs d'interface le long des deux tiges de guidage,
- un dispositif pour déplacer l'empilement dans la direction de guidage,
- un dispositif de lancement des drones depuis une zone de lancement.

Chacun des dispositifs d'interface comprend :
- au moins deux bagues de guidage (164A, 164B) adaptées pour entourer les deux tiges de guidage et pour former les deux zones d'interface,
- un corps (166) fixé sur l'un des drones et comportant au moins deux organes de fixation (168A, 168B) adaptés pour être fixés sur les deux bagues de guidage déjà montées sur les deux tiges de guidage.

## Description

### DOMAINE

La présente invention concerne le domaine des drones, plus particulièrement un système de lancement d'une pluralité de drones.

Par « drone », on entend dans le présent document un engin de type UAV, de l'anglais *Unmanned Aerial Vehicle,* c'est-à-dire un « véhicule aérien sans humain à bord », autrement dit un engin volant dont le pilotage est automatique ou télécommandé. De tels drones peuvent avoir des fonctions variées, telles que réaliser une mission d'observation, ou servir de leurre, etc.

L'invention concerne également une plateforme navale ou terrestre, ou un aéronef, comportant au moins un tel système, et concerne aussi un procédé de lancement correspondant.

### ART ANTERIEUR

Il est connu de lancer une pluralité de drones séquentiellement. Les drones sont par exemple stockés verticalement dans une « colonne », afin de gagner en surface au sol.

Toutefois, du fait de ce stockage en colonne, il n'est pas possible d'ajouter ou de retirer un drone entre deux drones déjà installés, sans retirer au préalable au moins un des drones déjà installés.

Un but de l'invention est de remédier à tout ou partie des inconvénients ci-dessus, en fournissant un système de lancement d'une pluralité de drones à la fois compact et permettant, plus facilement, d'ajouter un drone à ceux déjà installés ou de retirer un des drones déjà installés plus facilement.

### RESUME DE L'INVENTION

L'invention a pour objet un système selon la revendication 1.

Suivant d'autres aspects avantageux de l'invention, le système comprend une ou plusieurs des caractéristiques correspondant aux revendications 2 à 8, prise(s) isolément ou suivant toutes les combinaisons techniquement possibles.

L'invention a aussi pour objet une plateforme navale ou terrestre, ou un aéronef, selon la revendication 9.

L'invention a aussi pour objet un procédé selon la revendication 10.

### BREVE DESCRIPTION DES DESSINS

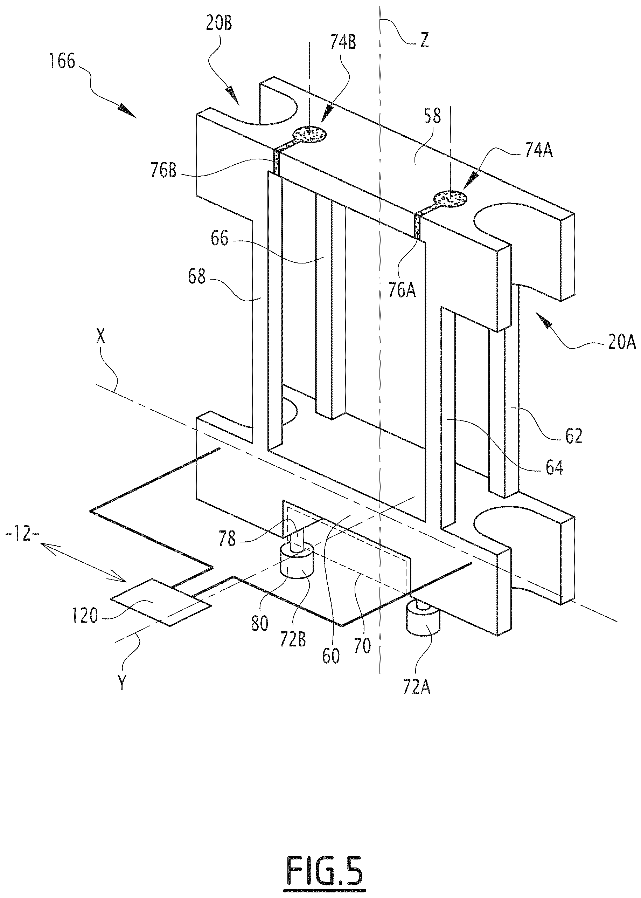

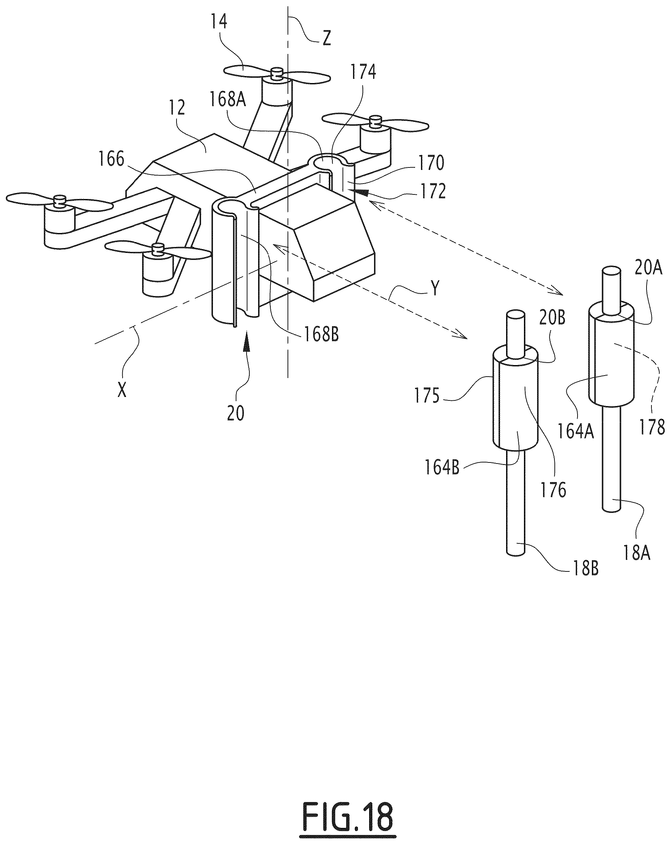

L'invention apparaîtra plus clairement à la lecture de la description qui va suivre, donnée uniquement à titre d'exemple non limitatif, et faite en référence aux dessins annexés, dans lesquels :
- la figure 1 est une vue schématique, de profil, d'un système de lancement d'une pluralité de drones selon l'invention, juste après l'envol d'un des drones, le chariot étant dans la position de lancement,
- la figure 2 est une vue schématique, de dessus, du système représenté sur la figure 1,
- la figure 3 est une vue schématique, de profil, du système représenté sur les figures 1 et 2, le chariot étant dans la position d'admission, un nouveau drone venant d'être poussé dans la zone d'admission par le dispositif de déplacement,
- la figure 4 est une vue schématique, partielle, de face, du système représenté sur les figures 1 à 3, montrant notamment le dispositif de guidage et un circuit électrique destiné à alimenter les drones dans la zone de stockage,
- la figure 5 est une vue schématique, en perspective, du corps d'un des dispositifs d'interface du système représenté sur les figures 1 à 4, présentant certaines caractéristiques des dispositifs d'interface, la forme générale du corps des dispositifs d'interface étant mieux représentée sur la figure 18,
- la figure 6 est une vue analogue à celle de la figure 3, le chariot ayant pris en charge l'un des drones et étant en train de se déplacer de la position de prise en charge vers la position de lancement représentée sur la figure 1,
- la figure 7 est une vue analogue à celle de la figure 6, le chariot étant en train de retourner de la position de prise en charge vers la position d'admission, après que l'un des drones a pris son envol,
- la figure 8 est une vue analogue à celle de la figure 7, le chariot étant en train de se déplacer de la position de lancement vers la position d'admission, après que l'un des drones défaillants n'a pas pris son envol, le dispositif anti-retour étant sur le point de dégager ce drone défaillant du chariot,
- la figure 9 est une vue analogue à celle de la figure 8, le chariot ayant poursuivi sa course et dépassé la position de prise en charge, le drone défaillant étant en train de tomber à l'extérieur du système de lancement,
- la figure 10 est une vue schématique, partielle, de profil, d'un système de lancement constituant une variante du système de lancement représenté sur les figures 1 à 3 et 5 à 9, dans laquelle le système est équipé d'un dispositif de sécurisation, le chariot étant dans la position d'admission et l'un des drones venant d'arriver dans la zone d'admission (comme sur la figure 3),
- la figure 11 est une vue analogue à celle de la figure 10, le chariot étant en train de se déplacer de la position d'admission vers la position de prise en charge et venant d'actionner le dispositif de sécurisation pour faire passer la pièce de sécurisation de la position de maintien à la position levée,
- la figure 12 est une vue analogue à celle de la figure 11, le chariot ayant pris en charge le drone situé dans la zone d'admission et étant en train de se déplacer de la position de prise en charge vers la position de lancement, la pièce de sécurisation étant en train de se déplacer de la position levée, représentée sur la figure 11, vers la position abaissée,
- la figure 13 est une vue analogue à celle de la figure 12, la pièce de sécurisation étant dans la position abaissée, et avantageusement bloquée dans cette position par le dispositif de sécurisation,
- la figure 14 est une vue analogue à celle de la figure 13, le drone ayant pris son envol (ou ayant été dégagé par le dispositif anti-retour), le chariot étant en train de retourner de la position de prise en charge à la position d'admission et d'actionner le dispositif de sécurisation pour permettre à la pièce de sécurisation de remonter de la position abaissée à la position de maintien, la pièce de sécurisation accompagnant le déplacement d'un nouveau drone de la zone de stockage vers la zone d'admission,
- la figure 15 est une vue analogue à celle de la figure 10, représentant une variante du système de lancement, adaptée pour lancer des drones à voilure fixe,
- la figure 16 est une vue analogue à celle de la figure 10, représentant une variante du système de lancement, équipée de roues et adaptée pour être déplacée manuellement,
- la figure 17 est une vue analogue à celle de la figure 1, montrant partiellement une plateforme navale équipée d'un lanceur d'engins vertical comportant un système analogue à celui représenté sur les figures 1 à 3 et 5 à 9, et
- la figure 18 est une vue analogue à celle de la figure 5, montrant le corps et les bagues de guidage d'un des dispositifs d'interface, certaines caractéristiques des

dispositifs d'interface n'étant pas représentées sur la figure 18 et visibles sur la figure 5, notamment les éventuels pions de maintien.

### DESCRIPTION DETAILLEE

### Système de lancement d'une pluralité de drone

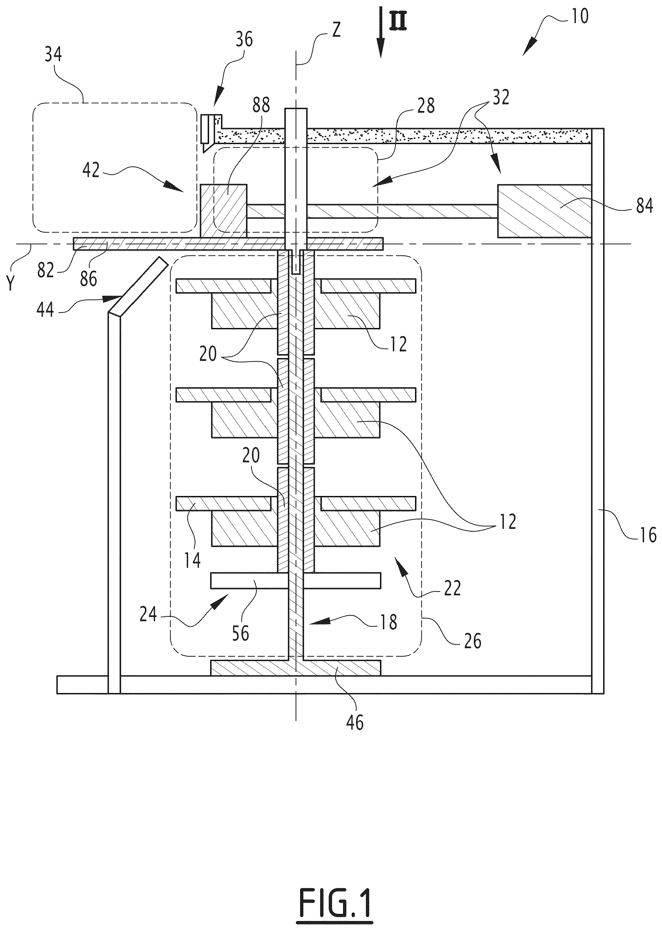

En référence aux figures 1 à 9 et 18, on décrit un système 10 selon l'invention.

Le système 10 est adapté pour lancer une pluralité de drones 12, au sens spécifié ci-dessus.

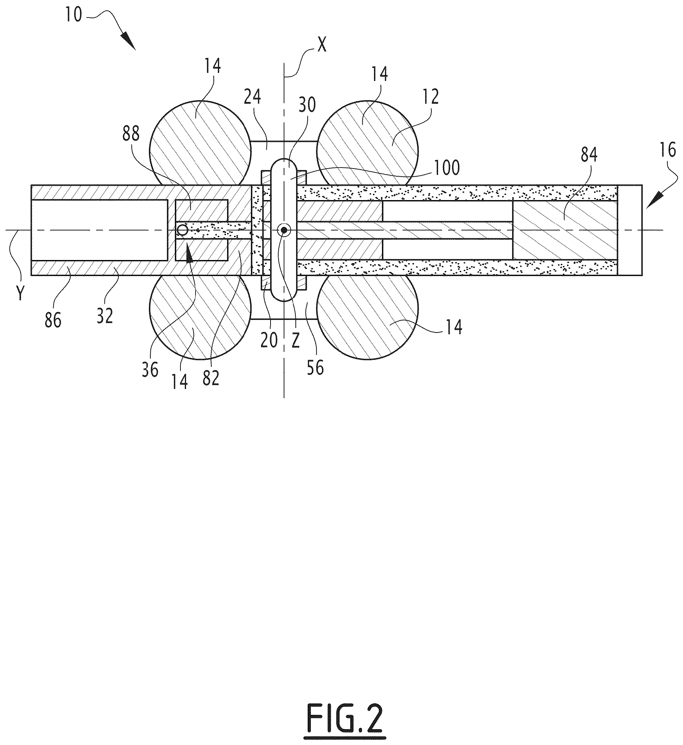

Dans l'exemple, les drones 12 sont à voilure tournante, et possèdent par exemple quatre hélices 14 (figure 2).

Selon une variante qui sera décrite plus tard, les drones 12 sont par exemple à voilure fixe.

Le système 10 comprend un châssis 16, et un dispositif de guidage 18 s'étendant dans une direction de guidage Z, par exemple sensiblement verticale.

Le système 10 comprend une pluralité de dispositifs d'interface 20 fixés respectivement sur les drones 12 et adaptés pour être empilés selon la direction de guidage Z de façon à former un empilement 22 définissant des emplacements respectifs pour les drones. Ceci permet de mettre en rotation les hélices 14 des drones 12 sans que les drones se touchent les uns les autres.

Les dispositifs d'interface 20 sont représentés de manière assez schématique sur les figures 1 à 17, sous la forme d'un cadre coopérant directement avec le système de guidage, et d'une manière plus réaliste sur la figure 18, qui sera décrite plus bas. Certaines caractéristiques des dispositifs d'interface 20 sont montrées sur les figures 1 à 17, tandis que d'autres caractéristiques sont montrées sur la figure 18.

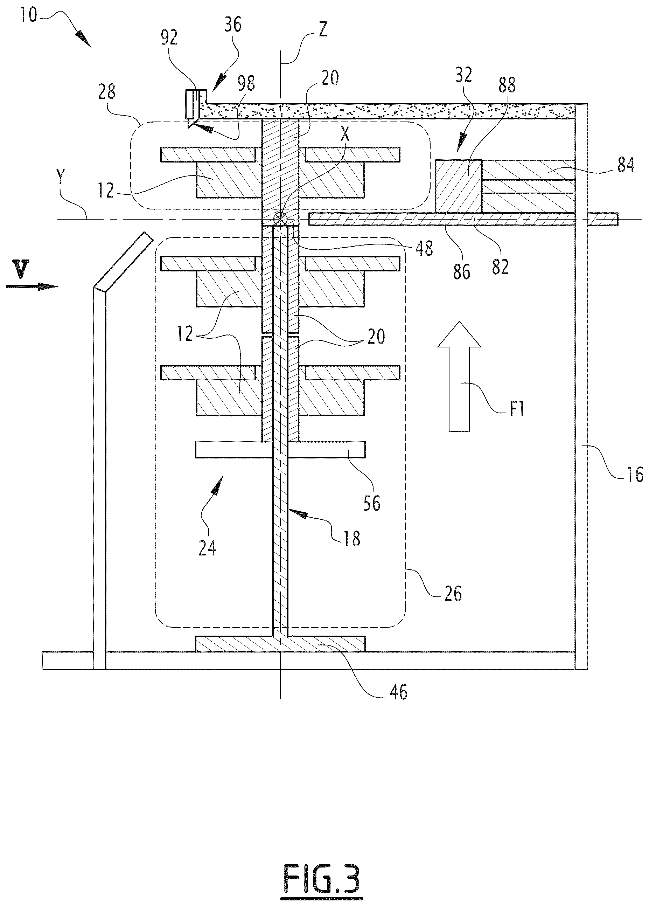

Le système 10 comprend un dispositif de déplacement 24 adapté pour déplacer l'empilement 22 (flèche F1, figure 3) dans la direction de guidage Z par rapport au châssis 16 et destiné à déplacer un des drones 12 et un des dispositifs d'interface 20 depuis une zone de stockage 26 définie par le système 10 jusqu'à une zone d'admission 28 (figure 3) également définie par le système.

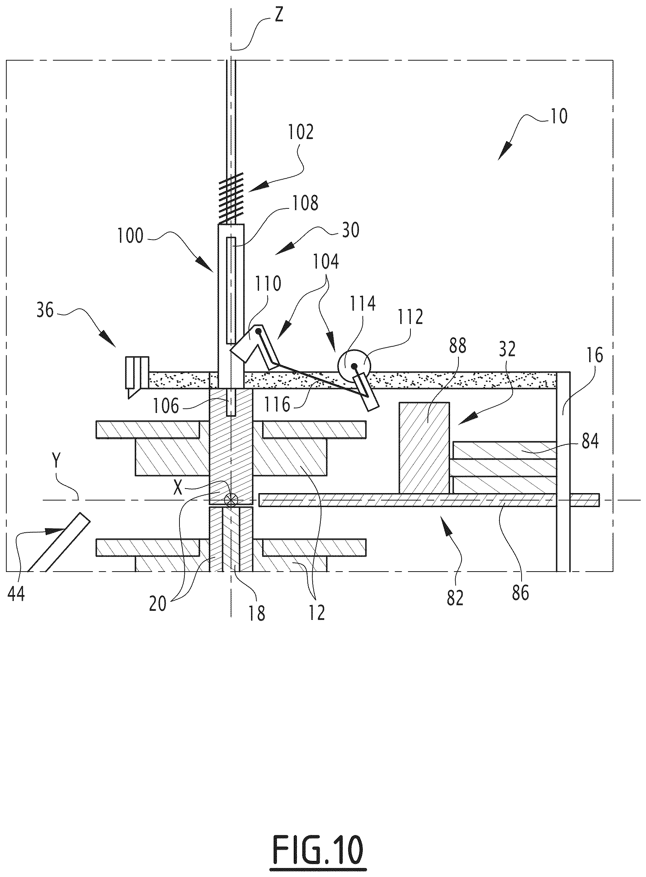

Avantageusement, le système 10 comprend un dispositif de sécurisation 30 (figure 10) adapté pour guider et maintenir ledit un des dispositifs d'interface 20 déplacé depuis la zone de stockage 26 jusqu'à la zone d'admission 28 par le dispositif de déplacement 24.

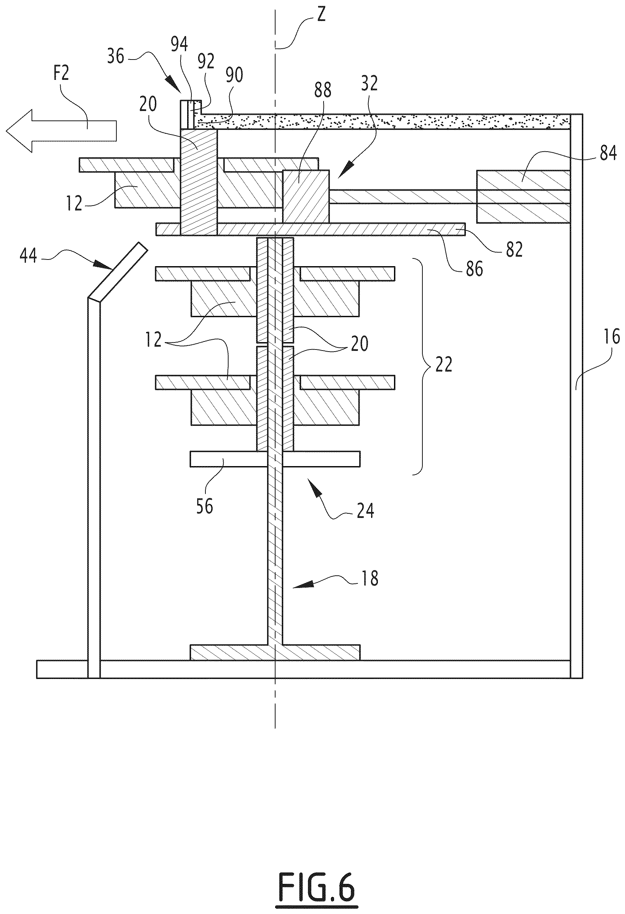

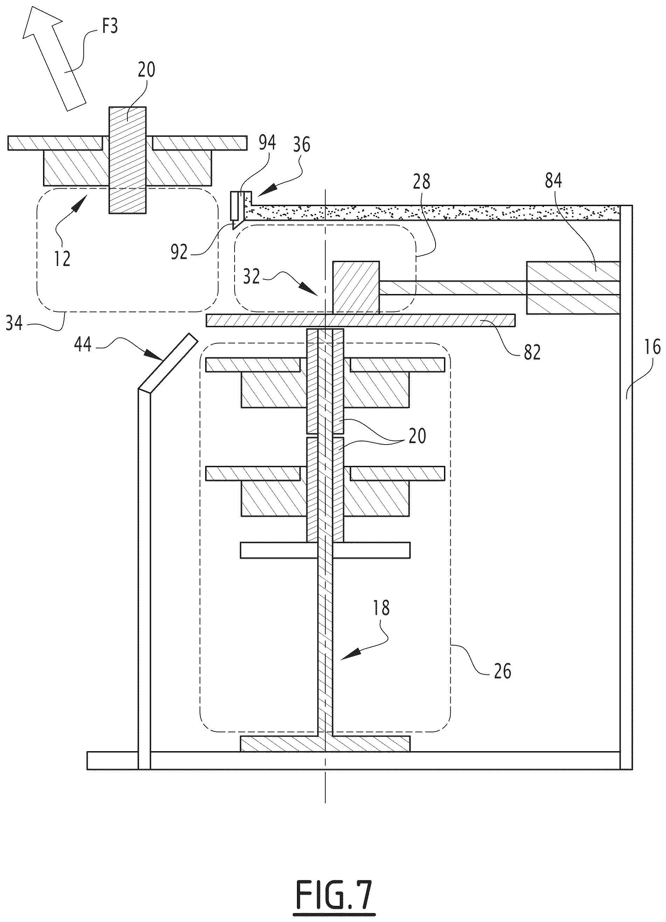

Le système 10 comprend un dispositif de lancement 32 adapté pour prendre en charge un des dispositifs d'interface 20 et un des drones 12 situés dans la zone d'admission 28 (flèche F2, figure 6) et à déplacer ledit un des dispositifs d'interface et ledit un des drones jusqu'à une zone de lancement 34 (figures 1 et 7) définie par le système 10, le dispositif de lancement 32 étant adapté pour permettre un envol (flèche F3, figure 7) du drone depuis la zone de lancement 34, puis à prendre en charge successivement les autres des dispositifs d'interface 20 et des drones 12.

Le système 10 comprend avantageusement un dispositif anti-retour 36 adapté pour permettre le lancement d'un des drones 12 et pour dégager un des drones du dispositif de lancement 32 si le drone est défaillant.

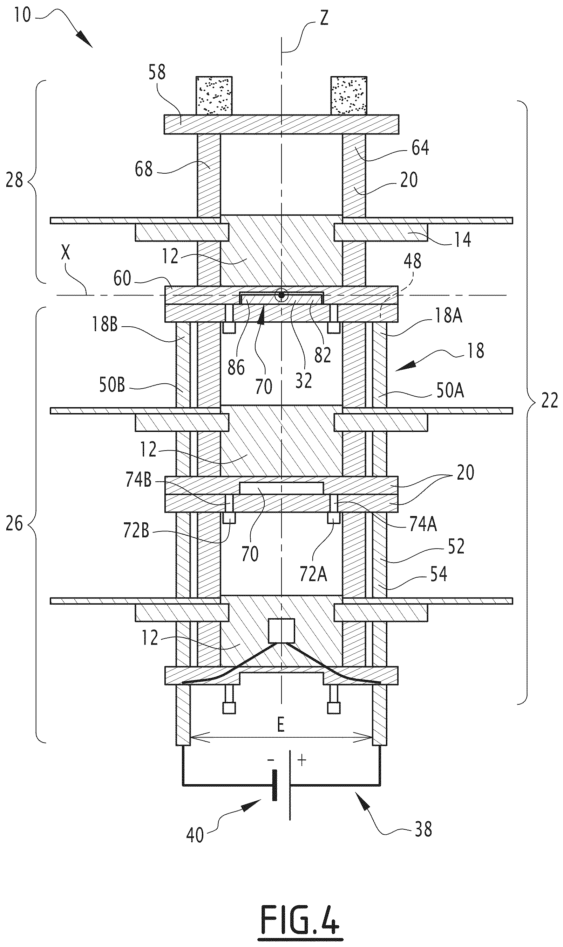

Le système 10 comprend avantageusement un circuit électrique 38 (figure 4), et par exemple une source d'énergie électrique 40 connectée électriquement au circuit électrique et destinée à alimenter électriquement les drones 12 dans la zone de stockage 26.

En variante, la source d'énergie électrique 40 est externe au système 10. Dit autrement, le système 10 est alors adapté pour être connecté à une source électrique externe.

### Châssis

Le châssis 16 forme par exemple une enveloppe entourant au moins partiellement la zone de stockage 26 et la zone d'admission 28.

En variante (non représentée), le châssis 16 est une structure porteuse lacunaire (comme une charpente).

Le châssis 16 définit avantageusement une sortie 42 (figure 1) située entre la zone d'admission 28 et la zone de lancement 34 et permettant le passage des drones pris en charge par le dispositif de lancement 32.

Sous cette sortie 42, le châssis 16 définit avantageusement un plan incliné 44 dont la fonction sera décrite plus bas.

### Dispositif de guidage

Le dispositif de guidage 18 comprend deux tiges de guidage 18A, 18B (figures 4 et 18) s'étendant parallèlement l'une à l'autre dans la direction de guidage Z.

Selon une variante non représentée, le dispositif de guidage 18 comprend plus de deux tiges de guidage.

Le dispositif de guidage 18 comprend par exemple un plateau 46 (figure 1) monté ou posé sur le châssis 16 de manière amovible.

Les deux tiges de guidage 18A, 18B sont avantageusement fixées sur le plateau 46 et s'étendent entre le plateau et le dispositif de lancement 32 dans la direction de guidage Z.

Chacune des deux tiges de guidage 18A, 18B comporte une extrémité distale 48 (figures 3 et 4) par rapport au plateau, l'extrémité distale 48 étant par exemple située entre la zone de stockage 26 et la zone d'admission 28.

Avantageusement, chacune des deux tiges de guidage 18A, 18B comprend au moins une partie électriquement conductrice 50A, 50B s'étendant selon la direction de guidage Z dans la zone de stockage 26. Selon un mode particulier de réalisation, chacune des deux tiges de guidage 18A, 18B est constituée d'un matériau électriquement conducteur.

Avantageusement, les deux tiges de guidage 18A, 18B sont montées réglables sur le plateau 46 entre une pluralité de configurations correspondant à une pluralité d'écartements E (figure 4) entre les deux tiges de guidage selon une première direction transversale X perpendiculaire à la direction de guidage Z.

Par exemple, chacune des deux tiges de guidage 18A, 18B est montée sur un trou oblong (non représenté) défini par le plateau 46, avantageusement à l'aide d'une rondelle (non représentée) fixée sur chacune des tiges de guidage et d'un écrou (non représenté) vissé sur chacune des tiges de guidage.

Les deux tiges de guidage 18A, 18B sont avantageusement cylindriques (à base circulaire).

La partie électriquement conductrice 50A, 50B comprend par exemple du graphite.

Selon des variantes non représentées, la partie électriquement conductrice 50A, 50B de chacune des deux tiges de guidage 18A, 18B comprend un ruban adhésif 52 comportant du cuivre, ou une couche métallique 54 obtenue par dépôt en phase vapeur.

Le plateau 46 est avantageusement électriquement isolant.

Au sens du présent document, on entend par « électriquement conducteur » par exemple un matériau dont la résistivité électrique à 300 K est par exemple inférieure ou égale à 10⁻⁵ Ω.m.

On entend par « électriquement isolant » un matériau dont la résistivité électrique à 300 K est par exemple supérieure ou égale à 10⁵ Ω.m.

### Dispositif de déplacement

Le dispositif de déplacement 24 comprend par exemple un plateau mobile 56 (figure 1) monté sur le dispositif de guidage 18 mobile en translation selon la direction de guidage Z.

Le plateau 56 est avantageusement situé sous l'empilement 22.

Le plateau 56 est mobile par exemple sous l'effet d'un contrepoids, d'un vérin ou d'au moins un ressort (non représentés).

### Dispositifs d'interface

Les dispositifs d'interface 20 sont par exemple dédiés à un type de drone. Dans ce cas, pour lancer différents types de drones, on utilise différents types de dispositifs d'interface, le reste du système 10 de lancement restant avantageusement inchangé.

Selon une variante non représentée, les dispositifs d'interface 20 sont modifiables, notamment dans leurs dimensions, de manière à pouvoir s'adapter à différents types de drones.

Dans l'exemple, chacun des dispositifs d'interface 20 comporte au moins deux zones d'interface 20A, 20B (figures 5 et 18) adaptées pour coopérer par contact mécanique, deux par deux, avec les deux tiges de guidage 18A, 18B respectivement de façon à guider chacun des dispositifs d'interface 20 le long des deux tiges de guidage dans la zone de stockage 26.

Dans l'exemple, chacun des dispositifs d'interface 20 comporte seulement les deux zones d'interface 20A, 20B.

Comme visible sur la figure 18, le dispositif d'interface 20 comprend deux bagues de guidage 164A, 164B adaptées pour entourer respectivement les deux tiges de guidage 18A, 18B autour de la direction de guidage Z et pour former les deux zones d'interface 20A, 20B.

Selon des variantes non représentées, le dispositif d'interface 20 comprend plus deux bagues de guidage formant plus de deux zones d'interface.

Avantageusement, d'autres bagues de guidage (non-représentées) sont pré-montées sur les deux tiges de guidage 18A. 18B, afin de constituer des emplacements pour des drones supplémentaires.

Le dispositif d'interface 20 comprend un corps 166 fixé sur l'un des drones 12.

Dans l'exemple, le corps 166 est rapporté sur chacun des drones 12. Par exemple, les drones 12 sont coincés dans des emplacements définis par le corps 166.

Selon une variante non représentée, le corps 166 fait partie d'un des drones 12.

Le corps 166 comporte deux organes de fixation 168A, 168B adaptés pour être fixés respectivement sur les deux bagues de guidage 164A, 164B alors que les deux bagues de guidages ont déjà été montées respectivement sur les deux tiges de guidage 18A, 18B.

Avantageusement, chacun des organes de fixation 164A, 164B comprend une partie 170 élastiquement déformable et définissant un logement 172, la partie élastiquement déformable étant adaptée pour être encliquetée respectivement sur l'une des deux bagues de guidage 164A, 164B, cette dernière étant reçue dans le logement 172 après encliquetage. La partie 170 élastiquement déformable comporte par exemple une surface cylindrique 174 délimitant au moins en partie le logement 172.

Les deux bagues de guidage 164A, 164B sont par exemple cylindriques.

Selon un mode particulier de réalisation, chacune des deux bagues de guidage 164A, 164B comprend deux demi-bagues 175, 176 mobiles entre une configuration montée (figure 18), dans laquelle les deux demi-bagues sont fixées l'une sur l'autre autour de l'une des deux tiges de guidage 18A, 18B, et une configuration démontée. Ceci permet d'ajouter ou de retirer facilement des bagues de guidage.

Le passage de la configuration démontée à la configuration montée permet de monter les deux bagues de guidage 164A, 164B du dispositif d'interface 20 respectivement sur les deux tiges de guidage 18A, 18B entre deux autres des dispositifs d'interface 20 (représentés sur les figures 10 à 14 par exemple) selon la direction de guidage Z, les deux zones d'interface 20A, 20B de chacun des deux autres des dispositifs d'interface 20 coopérant par contact mécanique avec les deux tiges de guidage 18A, 18B.

Les deux bagues de guidage 164A, 164B comprennent par exemple des roulements mécaniques 178 formant les deux zones d'interface 20A, 20B.

En variante ou en complément, les deux bagues de guidage 164A, 164B sont auto-lubrifiées, ou à lubrification solide.

Comme visible sur la figure 5 (sur laquelle les bagues de guidage ne sont pas représentées), le corps 166 comprend par exemple deux extrémités 58, 60 opposées l'une à l'autre dans la direction de guidage Z et s'étendant dans la première direction transversale X. Par exemple, le corps 166 comprend quatre montants 62, 64, 66, 68 reliant les deux extrémités entre elles dans la direction de guidage Z.

Avantageusement, celui des dispositifs d'interface 20 situé dans la zone d'admission 28 et un autre des dispositifs d'interface 20 voisin dans l'empilement 22 définissent entre eux un passage 70 (figures 4 et 5) dans une deuxième direction transversale Y orthogonale à la direction de guidage Z et à la première direction transversale X. Il en va avantageusement de même pour deux quelconques des dispositifs d'interface 20 consécutifs dans l'empilement 22.

### Eventuels pion(s) de maintien

Avantageusement, le corps 166 des dispositifs d'interface 20 comprend deux pions 72A, 72B faisant saillie à partir d'une des deux extrémités 58, 60 dans la direction de guidage Z, et deux logements traversants 74A, 74B définis par l'autre des deux extrémités 58, 60, et adaptés pour recevoir, dans la direction de guidage Z, les deux pions 72A, 72B du corps 166 d'un dispositif d'interface 20 voisin. Le corps 166 comporte deux fentes 76A, 76B définies par l'autre des deux extrémités 58, 60,

En variante (non représentée), le corps 166 comprend un seul pion 72A et définit un seul logement 74A et une seule fente 76A correspondants.

Chacun des pions 72A, 72B comporte par exemple une tige 78 et un embout 80 distal par rapport à l'extrémité 60 à partir de laquelle ils font saillie, l'embout 80 étant plus large que la tige 78 radialement par rapport à la direction de guidage Z.

L'embout 80 des pions 72A, 72B du dispositif d'interface 20 voisin est adapté pour dépasser des logements traversants 74A, 74B dans la direction de guidage Z.

Les deux fentes 76A, 76B sont adaptées pour permettre un passage de la tige 78 des pions du dispositif d'interface voisin depuis les logements traversants 74A, 74B vers la zone de lancement 34 selon la deuxième direction transversale Y.

### Dispositif de lancement

Le dispositif de lancement 32 comprend avantageusement un chariot 82, et au moins un actionneur 84.

L'actionneur 84 est adapté pour déplacer itérativement le chariot 82 par rapport au châssis 16, avantageusement en translation selon la deuxième direction transversale Y.

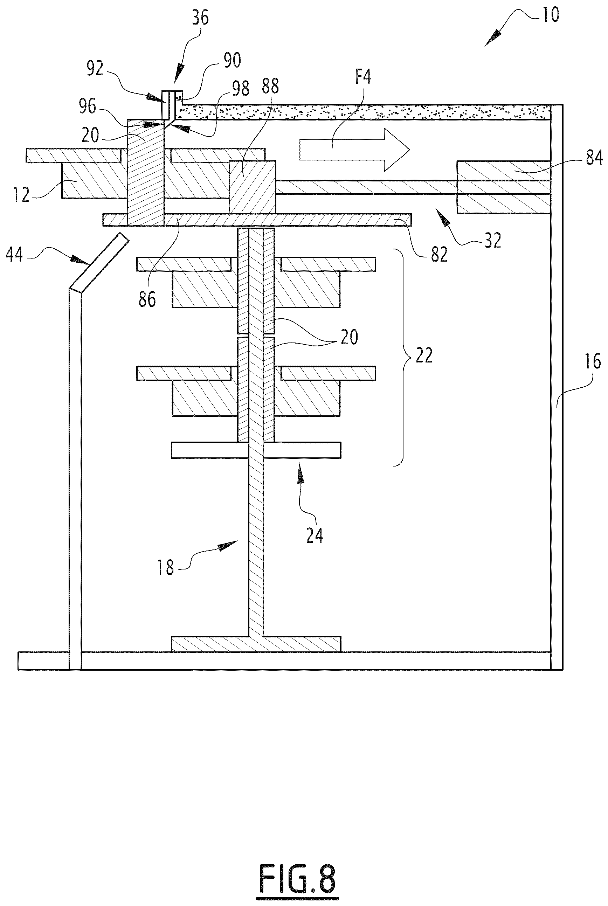

L'actionneur 84 est adapté pour déplacer le chariot 82 :
- depuis une position d'admission (figure 3), dans laquelle le chariot 82 permet à un des dispositifs d'interface 20 et un des drones 12 de passer de la zone de stockage 26 à la zone d'admission 28 sous l'action du dispositif de déplacement 24,
- vers une position de prise en charge (figure 4, ou en décalant le chariot 82 vers la gauche sur la figure 3), dans laquelle le chariot est destiné à supporter ledit un des dispositifs d'interface 20 et/ou le drone 12 correspondant situés dans la zone d'admission 28,
- puis vers une position de lancement (figures 1 et 2), destinée à permettre un envol du drone 12 correspondant depuis la zone de lancement 34,
- puis à nouveau (flèche F4 sur la figure 8) vers la position de prise en charge, et ensuite à nouveau vers la position d'admission.

Le chariot 82 est adapté pour déplacer ledit un des dispositifs d'interface 20 et/ou le drone 12 correspondant de la zone d'admission 28 à la zone de lancement 34 lorsque le chariot passe de la position d'admission à la position de lancement, et pour s'opposer au passage d'un autre des dispositifs d'interface 20 de la zone de stockage 26 à la zone d'admission 28 lorsque le chariot est dans la position de prise en charge et lorsque le chariot est dans la position de lancement.

L'actionneur 84 comprend par exemple un vérin pneumatique.

Le chariot 82 comprend avantageusement un plateau 86 et une butée 88.

Le plateau 86 s'étend par exemple perpendiculairement à la direction de guidage Z et est adapté pour s'introduire dans le passage 70 décrit plus haut, sans déplacer ledit un des dispositifs d'interface 20, lorsque le chariot 82 passe de la position d'admission à la position de prise en charge.

La butée 88 est adaptée pour pousser ledit un des dispositifs d'interface 20 et/ou le drone 12 correspondant lorsque le chariot 82 passe de la position de prise en charge à la position de lancement.

### Eventuel dispositif anti-retour

Le dispositif anti-retour 36 est adapté pour autoriser (ne pas s'opposer à) un passage (figure 6) dudit un des dispositifs d'interface 20 de la zone d'admission 28 vers la zone de lancement 34.

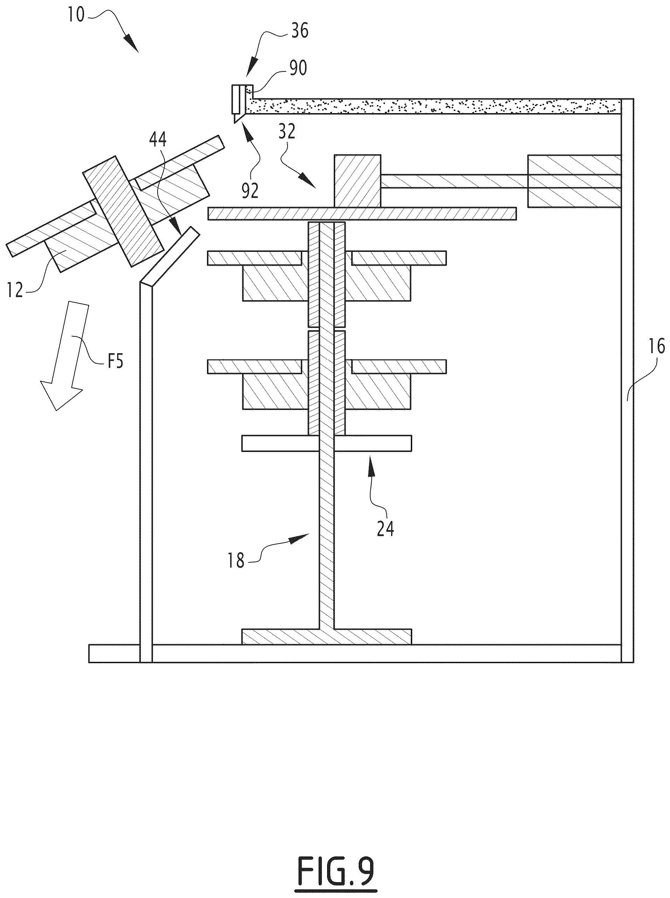

Le dispositif anti-retour 36 est avantageusement adapté pour s'opposer à un éventuel passage en sens inverse (figure 8) dudit un des dispositifs d'interface 20 de la zone de lancement 34 vers la zone d'admission 28, au cas où l'envol du drone 12 correspondant n'aurait pas eu lieu. Le dispositif anti-retour 36 est alors adapté pour dégager ledit un des dispositifs d'interface 20 du chariot 82 lorsque le chariot est déplacé de la position de lancement vers la position d'admission, le système 10 étant adapté pour que ledit un des dispositifs d'interface 20 tombe (flèche F5 sur la figure 9) alors du chariot 82 en dehors du système 10.

Dans l'exemple, le plan incliné 44 formé par le châssis 16 est avantageusement adapté pour guider le drone 12 en train de tomber.

Le dispositif anti-retour 36 comprend par exemple un support 90 monté sur le châssis, une pièce 92 montée mobile sur le support 90 entre une position de repos (figures 7 et 8 par exemple) et une position rétractée par rapport au support (figure 6), et un premier organe de rappel 94 adapté pour rappeler la pièce 92 de la position rétractée vers la position de repos.

Dans la position repos (figure 8), ledit un des dispositifs d'interface 20, plus exactement son corps 166, est destiné à buter sur une première surface 96 de la pièce 92, lors de l'éventuel passage en sens inverse de la zone de lancement 34 vers la zone d'admission 28.

La position rétractée (figure 6) est occupée lorsque le chariot 82 passe de la position d'admission 28 à la position de lancement 34 et pousse sur une deuxième surface 98 de la pièce 92 formant par exemple un plan incliné.

### Eventuel dispositif de sécurisation

Le dispositif de sécurisation 30 est optionnel et visible sur les figures 10 à 14 notamment.

Le dispositif de sécurisation 30 comprend par exemple une pièce de sécurisation 100 montée mobile en translation par rapport au châssis 16 selon la direction de guidage Z, un deuxième organe de rappel 102 pour rappeler la pièce de sécurisation dans la direction de guidage Z vers l'empilement 22, et un système de commande 104 adapté pour commander mécaniquement la pièce de sécurisation et pour être actionné par le chariot 82.

La pièce de sécurisation 100 est avantageusement adaptée pour coopérer avec un des dispositifs d'interface 20 déplacé depuis la zone de stockage 26 jusqu'à la zone d'admission 28 par le dispositif de déplacement 24, ledit un des dispositifs d'interface étant comprimé entre la pièce de sécurisation 100 et un autre des dispositifs d'interface 20 lorsque ledit un des dispositifs d'interface passe de la zone de stockage 26 à la zone d'admission 28.

La pièce de sécurisation 100 forme par exemple un portique entourant partiellement la deuxième direction transversale Y.

La pièce de sécurisation 100 comprend par exemple deux pions 106 (dont un seul est visible) de centrage destinés à coopérer avec ledit un des dispositifs d'interface 20, par exemple avec les zones d'interface 20A, 20B.

En variante (non représentée), la pièce de sécurisation 100 ne comporte qu'un seul pion de centrage.

La pièce de sécurisation 100 forme dans l'exemple une came 108 s'étendant dans la direction de guidage Z et en relief dans la première direction transversale X.

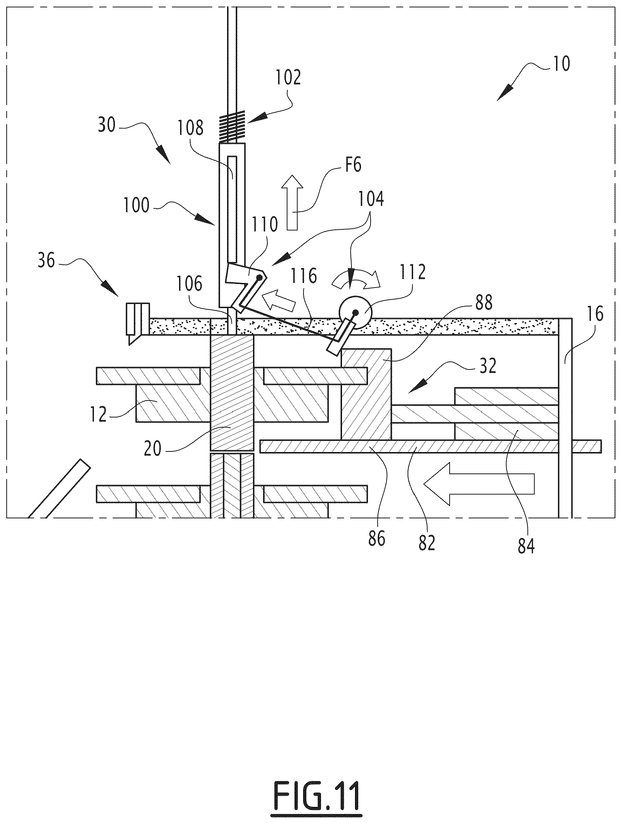

Le système de commande 104 est avantageusement adapté pour déplacer (flèche F6, figure 11) la pièce de sécurisation 100 par rapport au châssis 16 d'une position de maintien (figure 10), occupée lorsque ledit un des dispositifs d'interface 20 est dans la zone d'admission 28 et dans laquelle la pièce de sécurisation 100 empêche ledit un des dispositifs d'interface de basculer par rapport au châssis 16, à une position levée (figure 11), occupée lorsque le chariot 82 quitte la position de prise en charge vers la position de lancement, et dans laquelle la pièce de sécurisation 100 ne coopère plus avec ledit un des dispositifs d'interface 20.

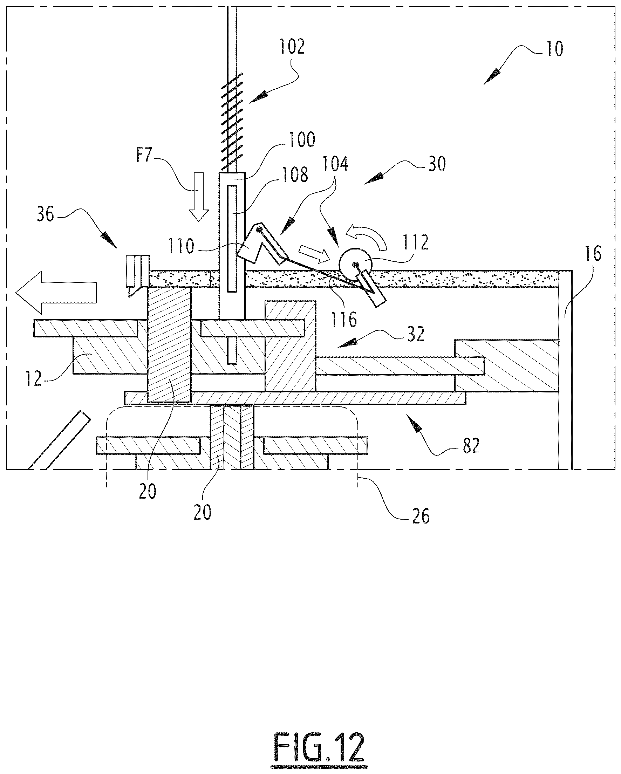

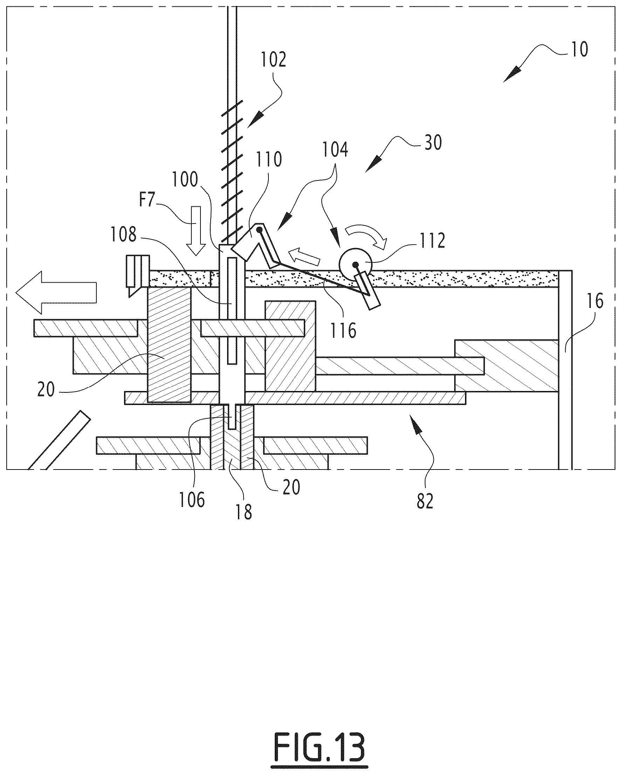

Le système de commande 104 est avantageusement adapté pour autoriser la pièce de sécurisation 100 à descendre (flèche F7, figure 12) de la position levée (figure 11) vers une position abaissée (figure 13) sous l'action du deuxième organe de rappel 102 lorsque le chariot 82 passe de la position de prise en charge à la position de lancement. Dans la position abaissée, la pièce de sécurisation 100 est adaptée pour coopérer avec un autre des dispositifs d'interface 20 encore situé dans la zone de stockage 26.

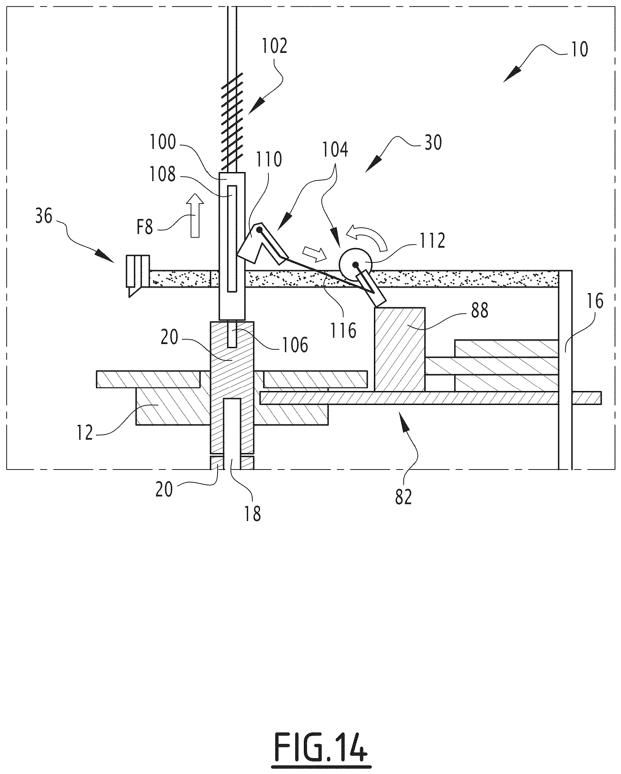

Le système de commande 104 est avantageusement adapté pour bloquer la pièce de sécurisation 100 dans la position abaissée (figure 13), lorsque le chariot 82 est dans la position de lancement (ou proche d'elle), et pour autoriser la pièce de sécurisation à remonter (flèche F8, figure 14) de la position abaissée à la position de maintien sous l'action du dispositif de déplacement 24, lorsque le chariot 82 passe de la position de prise en charge à la position d'admission. On comprend donc que l'action vers le haut du dispositif de déplacement 24 est alors plus forte que l'action vers le bas du deuxième organe de rappel 102.

Dans l'exemple, le système de commande 104 comprend une manivelle 110 montée rotative sur le châssis 16 et adaptée pour agir sur la came 108, un vilebrequin 112 monté rotatif sur le châssis et adapté pour être actionné par le chariot 82, un ressort de torsion 114 adapté pour appliquer un couple de rappel sur le vilebrequin, et une bielle 116 de transmission entre la manivelle 110 et le vilebrequin 112.

### Alimentation électrique des drones

Le circuit électrique 38 (figure 4) est connecté électriquement à la partie électriquement conductrice 50A, 50B de chacune des deux tiges de guidage 18A, 18B.

Chacune des zones d'interface 20A, 20B (figures 5 et 18) comprend au moins une couche de surface (non représentée) électriquement conductrice adaptée pour être respectivement en contact électrique avec la partie électriquement conductrice 50A, 50B de l'une des deux tiges de guidage 18A, 18B.

La couche de surface de chacune des quatre zones d'interface 20A, 20B est reliée électriquement à l'un des drones 12.

Par exemple, chacun des dispositifs d'interface 20 comporte une prise électrique 120 d'interface reliée électriquement à la couche de surface des zones d'interface 20A, 20B la prise électrique 120 étant connectée électriquement à l'un des drones 12.

### Fonctionnement du système

Le fonctionnement du système 10 découle de sa structure et va maintenant être décrit de façon à illustrer un procédé selon l'invention.

Les dispositifs d'interface 20 sont fixés respectivement sur les drones 12 et empilés selon la direction de guidage Z de façon à former l'empilement 22 définissant les emplacements respectifs pour les drones.

Les zones d'interface 20A, 20B de chacun des dispositifs d'interface 20 coopèrent par contact mécanique avec les deux tiges de guidage 18A, 18B, de manière à guider chacun des dispositifs d'interface le long des deux tiges de guidage dans la zone de stockage 26.

Le chariot 82 est par exemple initialement dans la position d'admission (figure 3).

Le dispositif de déplacement 24 déplace (flèche F1) l'empilement 22 dans la direction de guidage Z par rapport au châssis 16, et déplace un des drones et un des dispositifs d'interface depuis la zone de stockage jusqu'à la zone d'admission (figure 3). Dans l'exemple, le plateau 56 pousse l'empilement 22 verse haut selon la direction de guidage Z, les dispositifs d'interface 20 étant guidés par les deux tiges de guidage 18A, 18B dans la zone de stockage 26. Le chariot 82 ne s'oppose pas à l'arrivée d'un des dispositifs d'interface 20 et d'un des drones 12 dans la zone d'admission 28.

Dans la zone d'admission 28, ledit un des dispositifs d'interface 20 est libre par rapport au dispositif de guidage 18. Dans l'exemple, les quatre zones d'interface 20A, 20B ne coopèrent plus avec les deux tiges de guidage 18A, 18B, qui s'interrompent avant la zone d'admission 28.

L'actionneur 84 déplace le chariot 82 par rapport au châssis 16 de la position d'admission à la position de prise en charge. Dans la position de prise en charge (figure 4), le chariot 82 supporte ledit un des dispositifs d'interface 20 et/ou le drone 12 correspondant situés dans la zone d'admission 28 et s'oppose au passage d'un autre des dispositifs d'interface 20 de la zone de stockage 26 à la zone d'admission 28. Dans l'exemple, le plateau 86 s'introduit dans le passage 70 (figure 4) et la butée 88 pousse ledit un des dispositifs d'interface 20 et/ou le drone 12 correspondant.

Le chariot 82 est déplacé par l'actionneur 84 de la position de prise en charge vers la position de lancement, pour déplacer (flèche F2) ledit un des dispositifs d'interface 20 et/ou le drone 12 correspondant de la zone d'admission 28 à la zone de lancement 34 (figure 6). Le chariot 82 s'oppose au passage d'un autre des dispositifs d'interface 20 de la zone de stockage 26 à la zone d'admission 28 lorsque le chariot est dans la position de lancement.

Avantageusement, le dispositif anti-retour 36 autorise ledit un des dispositifs d'interface 20 à passer de la zone d'admission 28 vers la zone de lancement 34. Dans l'exemple, la pièce 92 est dans la position rétractée, car la pièce est par exemple poussée vers le haut par ledit un des dispositifs d'interface 20 dans la direction de guidage Z.

Le drone 12 correspondant, s'il est fonctionnel, s'envole (flèche F3) depuis la zone de lancement 34 (figure 7).

L'actionneur 84 déplace (flèche F4) le chariot 82 de la position de lancement vers la position de prise en charge, et ensuite à nouveau vers la position d'admission pour admettre un nouveau drone 12 dans la zone d'admission 28.

Les déplacements précités du chariot 82 sont répétés plusieurs fois pour permettre l'envol de la pluralité de drones 12 (ou l'éjection des éventuels drones défectueux).

Un éventuel passage en sens inverse dudit un des dispositifs d'interface 20 de la zone de lancement 34 vers la zone d'admission 28 est avantageusement empêché par le dispositif anti-retour 36 si le drone 12 correspondant ne s'est pas envolé (figure 8). Dans l'exemple, la pièce 92 est dans la position de repos et ledit un des dispositifs d'interface 20 bute sur la première surface 96.

Le dispositif anti-retour 36 dégage alors ledit un des dispositifs d'interface 20 du chariot 82 lorsque le chariot passe de la position de lancement vers la position d'admission. Ledit un des dispositifs d'interface 20, et le drone 12 correspondant, tombent alors du chariot 82 en dehors du système (flèche F5, figure 9). Avantageusement, le plan incliné 44 facilite l'évacuation du drone défaillant.

Les éventuels pions 72A, 72B (figures 4 et 5) de maintien permettent de maintenir ledit un des dispositifs d'interface 20 en position lorsqu'il arrive dans la zone d'admission 28, par coopération avec un autre des dispositifs d'interface 20 situés en dessous. Lorsque que le chariot 82 quitte la position de prise en charge, les pions 72A, 72B du dispositif d'interface 20 situé au-dessus quittent les logements traversants 74A, 74B du dispositif d'interface 20 situé en dessous en passant par les fentes 76A, 76B.

### Fonctionnement du dispositif de sécurisation

La pièce de sécurisation 100 est par exemple initialement dans la position de maintien (figure 10), ledit un des dispositifs d'interface 20 venant d'arriver dans la zone d'admission 28 depuis la zone de stockage 26. La pièce de sécurisation 100 empêche ledit un des dispositifs d'interface 20 de basculer par rapport au châssis 16. La manivelle 110 est en appui sur la came 108.

Comme visible sur la figure 11, le chariot 82 passe de la position d'admission vers la position de prise en charge et actionne le système de commande 104, qui déplace (flèche F6) la pièce de sécurisation 100 de la position de maintien (figure 10) vers la position levée (figure 11). Plus précisément, la butée 88 fait tourner le vilebrequin 112, ce qui qui provoque une rotation de la manivelle 110 via la bielle 116. La rotation de la manivelle 110 soulève la came 108.

Dans la position levée, la pièce de sécurisation 100 ne coopère plus avec ledit un des dispositifs d'interface 20 et le chariot 82 prend en charge ledit un des dispositifs d'interface 20.

Puis le chariot 82 se déplace vers la position de lancement. Le système de commande 104 autorise la pièce de sécurisation 100 à descendre (flèche F7, figure 12) de la position levée (figure 11) vers la position abaissée (figure 13) sous l'action du deuxième organe de rappel 102. Plus précisément, le vilebrequin 112 est libéré et revient en position initiale sous l'action du ressort de torsion 114. La manivelle 110 tourne et permet à la pièce de sécurisation 100 de descendre.

Dans la position abaissée, la pièce de sécurisation 100 coopère avec un autre des dispositifs d'interface 20 encore situé dans la zone de stockage 26.

Le système de commande 104 bloque la pièce de sécurisation 100 dans la position abaissée (figure 13), notamment lorsque le chariot 82 est dans la position de lancement. Le système de commande 104 reprend par exemple sa position initiale sous l'action du ressort de torsion 114, et la manivelle 110 bloque la pièce de sécurisation 100 dans sa position abaissée.

Lorsque le chariot 82 repasse de la position de prise en charge vers la position d'admission, le système de commande autorise la pièce de sécurisation 100 à remonter (flèche F8, figure 14) de la position abaissée à la position de maintien sous l'action du dispositif de déplacement 24 qui pousse l'empilement 22. Plus précisément, la butée 88 fait tourner le vilebrequin 112 au-delà de la position initiale, ce qui provoque une rotation de la manivelle 110 qui cesse de bloquer la pièce de sécurisation 100 dans la position abaissée. La pièce de sécurisation 100 peut alors remonter.

Lorsque le chariot 82 revient dans la position d'admission et que la pièce de sécurisation 100 est dans la position de maintien, le système de commande 104 reprend sa position initiale et la manivelle 110 est à nouveau en appui sur la came (figure 10).

### Fonctionnement électrique

La source électrique 40 (figure 4) envoie un courant dans la partie électriquement conductrice 50A de l'une 18A des deux tiges de guidage, et reçoit ce courant de l'autre 50B. Le courant passe par la couche de surface 118 (figure 5) de chacune des zones d'interface 20A, 20B, et par la prise électrique 120 d'interface, ce qui permet d'alimenter chacun des drones 12 dans la zone de stockage 26.

### Intégration du système dans une plateforme

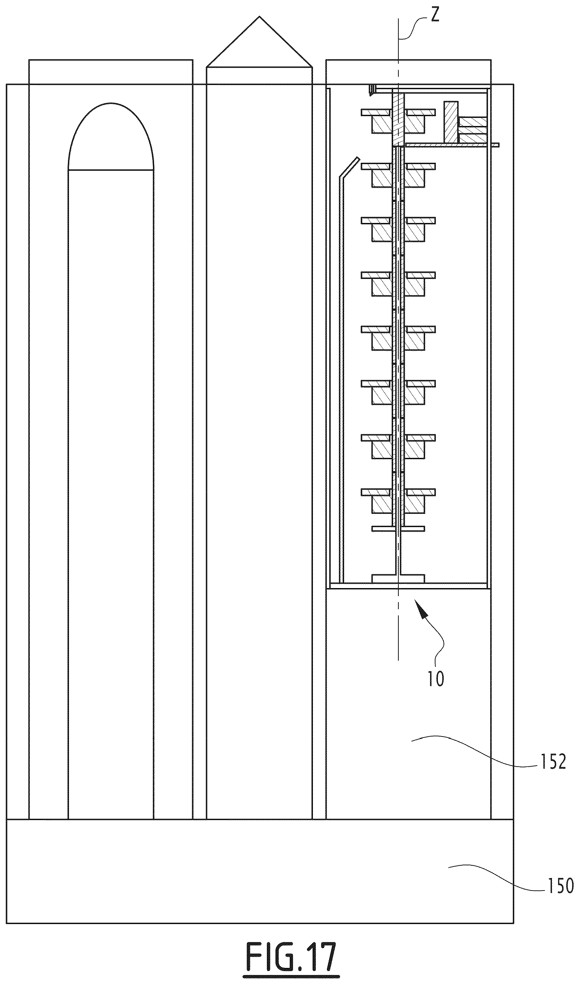

Le système 10 a vocation à être intégré dans une installation plus vaste, telle qu'une plateforme 150 (figure 17) navale ou terrestre, ou un aéronef.

Le système 10 peut par exemple être intégré :
- dans une installation de lancement de missiles (figure 17), par exemple dans une fosse libre 152. L'intégration se fait avantageusement par le haut sans nécessiter d'adaptation particulière de la fosse ;
- dans une installation de défense de site ;
- dans un abri ou container maritime pour usage défensif de zone au sol,
- dans un porteur logistique ou une barge maritime pour protéger un parc éolien flottant, ou sur un bâtiment de soutien de type ravitailleur de forces ;
- à l'arrière ou sur le toit d'un véhicule blindé ;
- à l'arrière d'un véhicule cargo ou d'un camion plateau ;
- dans un pont de frégate, de corvette ou d'un véhicule de surface sans pilote (USV) ;
- sur le toit d'une vedette ;
- dans un porteur aérien en vue un largage ;
- dans un hélicoptère ou porteur aérien sans pilote, avantageusement pour une mise en œuvre par la partie inférieure de l'aéronef.

Ces mises en œuvre, sauf la première mentionnée, sont purement illustratives et ne sont pas représentées sur les figures.

### Autres variantes du système

Dans ces variantes, le système 10 est analogue à ceux représentés sur les figures 1 à 14. Les éléments similaires portent les mêmes références numériques et ne seront pas décrits à nouveau. Seules les différences ou spécificités seront décrites en détail ci-après.

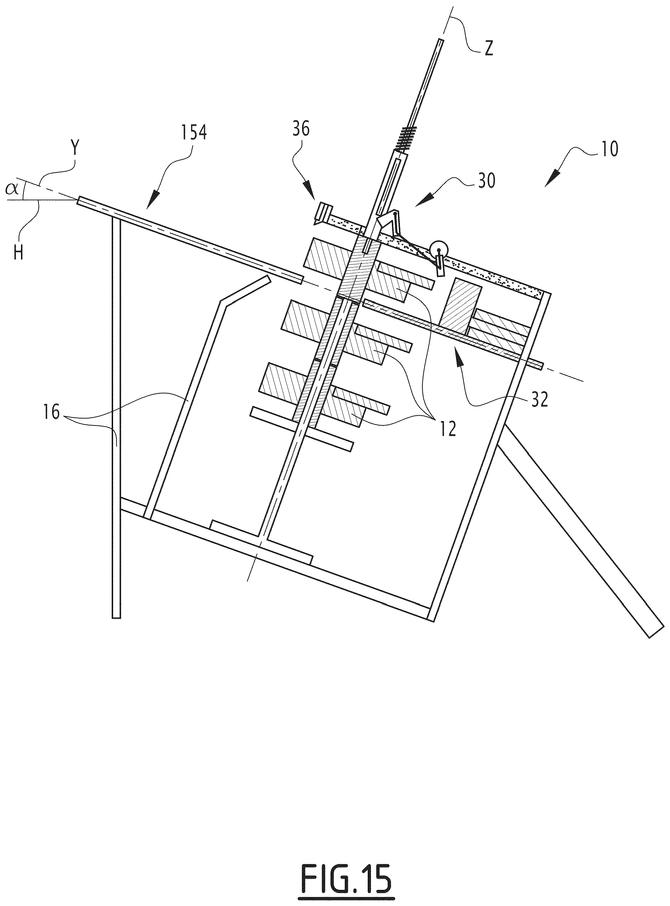

En référence à la figure 15, on décrit un système 10 adapté pour lancer des drones 12 à voilure fixe.

Le châssis 16 est avantageusement incliné. Plus précisément, la deuxième direction transversale Y forme un angle a aigu avec un plan horizontal H.

Le châssis 16 forme avantageusement une rampe de lancement 154.

Le dispositif de lancement 32 est adapté pour donner à chacun des drones 12 lancés une vitesse initiale prédéfinie.

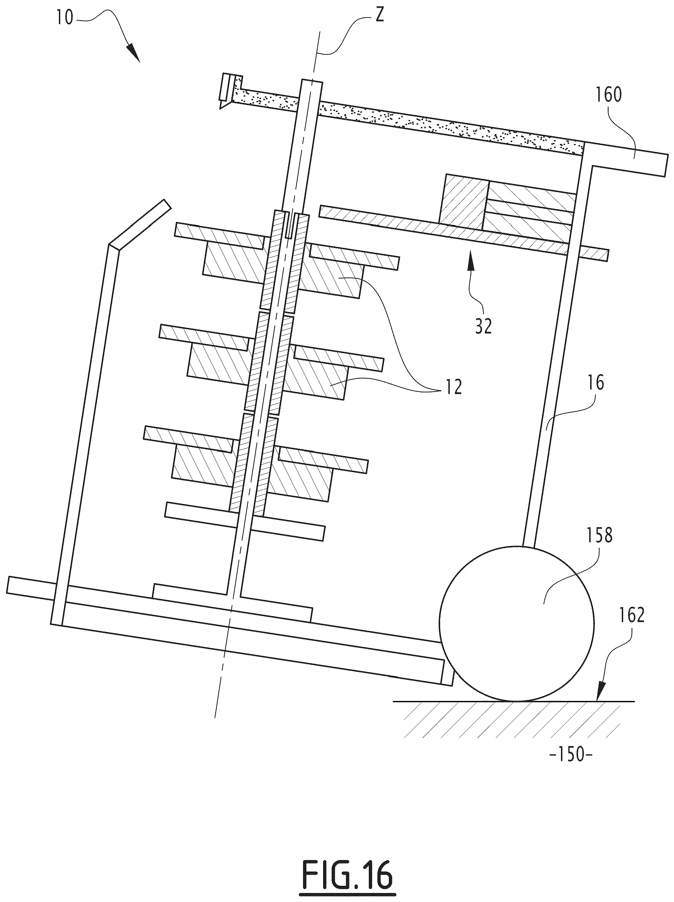

En référence à la figure 16, on décrit un système 10 portatif. Le châssis 16 est équipé de roues 158 et de poignées 160 permettant à un utilisateur (non représenté) de déplacer le système 10, par exemple sur un pont 162 d'une plateforme navale 150.

En référence à la figure 17, on décrit à nouveau un système 10 intégré dans une installation de lancement de missiles, par exemple intégrée à une plateforme navale 150. L'installation comporte par exemple plusieurs silos ou fosses, dont l'une 152 est occupée par le système 10.

### Avantages

Grâce aux caractéristiques décrites ci-dessus, le système 10 permet de lancer la pluralité de drones 12 en restant compact, tout en permettant facilement d'ajouter un drone aux drones 12 déjà installés ou de retirer un des drones 12 déjà installés. En effet, ces opérations ne requièrent de retirer d'autres drones déjà installés.

## Revendications

1. Système (10) de lancement d'une pluralité de drones (12), comprenant :
- un châssis (16),
- un dispositif de guidage (18) comprenant au moins deux tiges de guidage (18A, 18B) s'étendant parallèlement l'une à l'autre dans une direction de guidage (Z),
- une pluralité de dispositifs d'interface (20) destinés à être fixés respectivement sur les drones (12) et adaptés pour être empilés selon la direction de guidage (Z) de façon à former un empilement (22) définissant des emplacements respectifs pour les drones (12), chacun des dispositifs d'interface (20) comportant au moins deux zones d'interface (20A, 20B) adaptées pour coopérer par contact mécanique avec les deux tiges de guidage (18A, 18B) respectivement de façon à guider chacun des dispositifs d'interface (20) le long des deux tiges de guidage (18A, 18B) dans une zone de stockage (26) définie par le système (10),
- un dispositif de déplacement (24) adapté pour déplacer l'empilement (22) dans la direction de guidage (Z) par rapport au châssis (16) et destiné à déplacer un des drones (12) et un des dispositifs d'interface (20) depuis la zone de stockage (26) jusqu'à une zone d'admission (28) définie par le système (10), et
- un dispositif de lancement (32) destiné à prendre en charge un des dispositifs d'interface (20) et un des drones (12) situés dans la zone d'admission (28) et à déplacer ledit un des dispositifs d'interface (20) et ledit un des drones (12) jusqu'à une zone de lancement (34) définie par le système (10), le dispositif de lancement (32) étant destiné à permettre un envol dudit un des drones (12) depuis la zone de lancement (34), puis à prendre en charge successivement les autres des dispositifs d'interface (20) et des drones (12),
chacun des dispositifs d'interface (20) comprenant :
- au moins deux bagues de guidage (164A, 164B) adaptées pour entourer respectivement les deux tiges de guidage (18A, 18B) autour de la direction de guidage (Z) et pour former les deux zones d'interface (20A, 20B), et
- un corps (166) destiné à être fixé sur l'un des drones (12), le corps (166) comportant au moins deux organes de fixation (168A, 168B) adaptés pour être fixés respectivement sur les deux bagues de guidage (164A, 164B) alors que les deux bagues de guidage (164A, 164B) ont déjà été montées respectivement sur les deux tiges de guidage (18A, 18B).

2. Système (10) selon la revendication 1, dans lequel chacun des organes de fixation (168A, 168B) comprend une partie (170) élastiquement déformable et définissant un logement (172), la partie (170) élastiquement déformable étant adaptée pour être encliquetée respectivement sur l'une des deux bagues de guidage (164A, 164B), la partie (170) élastiquement déformable étant reçue dans le logement (172) après encliquetage.

3. Système (10) selon la revendication 2, dans lequel les deux bagues de guidage (164A, 164B) sont cylindriques et la partie (170) élastiquement déformable comporte une surface cylindrique (174) délimitant au moins en partie le logement (172).

4. Système (10) selon l'une quelconque des revendication 1 à 3, dans lequel chacune des deux bagues de guidage (164A, 164B) d'au moins un des dispositifs d'interface (20) comprend deux demi-bagues (175, 176) mobiles entre une configuration montée, dans laquelle les deux demi-bagues (175, 176) sont fixées l'une sur l'autre autour de l'une des deux tiges de guidage (18A, 18B), et une configuration démontée, le passage de la configuration démontée à la configuration montée permettant de monter les deux bagues de guidage (164A, 164B) dudit au moins un des dispositifs d'interface (20) respectivement sur les deux tiges de guidage (18A, 18B) entre deux autres des dispositifs d'interface (20) selon la direction de guidage (Z), les deux zones d'interface (20A, 20B) de chacun des deux autres des dispositifs d'interface (20) coopérant par contact mécanique avec les deux tiges de guidage (18A, 18B).

5. Système (10) selon l'une quelconque des revendication 1 à 4, dans lequel les deux bagues de guidage (164A, 164B) comprennent des roulements mécaniques (178) formant les deux zones d'interface (20A, 20B).

6. Système (10) selon l'une quelconque des revendication 1 à 5, dans lequel les deux bagues de guidage (164A, 164B) sont auto-lubrifiées, ou à lubrification solide.

7. Système (10) l'une quelconque des revendication 1 à 6, dans lequel le dispositif de guidage (18) comprend en outre un plateau (46) monté sur le châssis (16) de manière amovible, les deux tiges de guidage (18A, 18B) étant fixées sur le plateau (46) et s'étendant entre le plateau (46) et le dispositif de lancement (32) dans la direction de guidage (Z), les deux tiges de guidage (18A, 18B) étant montées réglables sur le plateau (46) entre une pluralité de configurations correspondant à une pluralité d'écartements (E) entre les deux tiges de guidage (18A, 18B).

8. Système (10) selon l'une quelconque des revendications 1 à 7, dans lequel le corps (166) comprend :
- deux extrémités (58, 60) opposées l'une à l'autre dans la direction de guidage (Z) et s'étendant dans une première direction transversale (X) orthogonale à la direction de guidage (Z),
- au moins un pion (72A) faisant saillie à partir d'une des deux extrémités (58, 60) dans la direction de guidage (Z), le pion (72A) comportant une tige (78) et un embout (80) distal par rapport à ladite une des deux extrémités (58, 60), l'embout (80) distal étant plus large que la tige (78) radialement par rapport à la direction de guidage (Z),
- au moins un logement traversant (74A) défini par l'autre des deux extrémités (58, 60), et adapté pour recevoir, dans la direction de guidage (Z), le pion (72A) d'un dispositif d'interface voisin appartenant à la pluralité de dispositifs d'interface (20), l'embout (80) du pion (72A) du dispositif d'interface voisin étant adapté pour dépasser du logement traversant (74A) dans la direction de guidage (Z), et
- au moins une fente (76A) définie par l'autre des deux extrémités (58, 60), et adaptée pour permettre un passage de la tige (78) du pion (72A) du dispositif d'interface voisin depuis le logement traversant (74A) vers la zone de lancement (34) selon une deuxième direction transversale (Y) orthogonale à la direction de guidage (Z) et à la première direction transversale (X).

9. Plateforme (150) navale ou terrestre, ou aéronef, comportant au moins un système (10) selon l'une quelconque des revendications 1 à 8.

10. Procédé de lancement d'une pluralité de drones (12), comprenant les étapes suivantes :
- obtention d'un système (10) selon l'une quelconque des revendications 1 à 8 ou d'une plateforme (150) selon la revendication 9, et d'une pluralité de drones (12), le corps (166) de chacun des dispositifs d'interface (20) étant fixé respectivement l'un des drones (12),
- montage des deux bagues de guidage (164A, 164B) de chacun des dispositifs d'interface (20) respectivement sur les deux tiges de guidage (18A, 18B), les deux bagues de guidage entourant respectivement les deux tiges de guidage autour de la direction de guidage (Z) et formant les deux zones d'interface (20A, 20B),
- fixation des deux organes de fixation (168A, 168B) de chacun des dispositifs d'interface (20) respectivement sur les deux bagues de guidage (164A, 164B) alors que les deux bagues de guidage (164A, 164B) ont déjà été montées respectivement sur les deux tiges de guidage (18A, 18B), les dispositifs d'interface (20) étant empilés selon la direction de guidage (Z) de façon à former un empilement (22) définissant des emplacements respectifs pour les drones (12),
- coopération des deux zones d'interface (20A, 20B) de chacun des dispositifs d'interface (20) par contact mécanique avec les deux tiges de guidage (18A, 18B), et guidage de chacun des dispositifs d'interface (20) le long des deux tiges de guidage (18A, 18B) dans la zone de stockage (26),
- déplacement, par le dispositif de déplacement (24), de l'empilement (22) dans la direction de guidage (Z) par rapport au châssis (16), et déplacement d'un des drones (12) et d'un des dispositifs d'interface (20) depuis la zone de stockage (26) jusqu'à la zone d'admission (28),
- prise en charge, par le dispositif de lancement (32), d'un des dispositifs d'interface (20) et d'un des drones (12) situés dans la zone d'admission (28) et déplacement dudit un des dispositifs d'interface (20) et dudit un des drones (12) jusqu'à la zone de lancement (34), et envol dudit un des drones (12) depuis la zone de lancement (34), et
- prise en charge successive des autres des dispositifs d'interface (20) et des drones (12) par le dispositif de lancement (32).
